# EUROPEAN PATENT SPECIFICATION

(11) **EP 2 402 846 B1**
(45) Date of publication and mention of the grant of the patent: **29.04.2020**
(21) Application number: 11005217.2
(22) Date of filing: 27.06.2011
(51) Int. Cl.: G06F 3/0488, G06F 3/0481

(54) **Mobile terminal and method for controlling operation of the mobile terminal**
Mobiles Endgerät und Verfahren zur Steuerung des Betriebs des mobilen Endgeräts
Terminal mobile et procédé de commande du fonctionnement du terminal mobile

(30) Priority: 29.06.2010 KR 20100062277
(43) Date of publication of application: 04.01.2012
(73) Proprietor: LG ELECTRONICS INC., SEOUL, 07336 (KR)
(72) Inventor: Noh, Kensin, Seoul 153-023 (KR)
(74) Representative: Ter Meer Steinmeister & Partner

(56) References cited:
- EP-A2- 1 569 075
- EP-A2- 1 674 976
- EP-A2- 2 098 947
- WO-A1-00/75766
- WO-A1-03/054681
- WO-A1-2009/080653
- US-A1- 2005 088 410
- US-A1- 2009 207 144
- US-A1- 2009 228 792
- VOGEL D ET AL: "SHIFT: A TECHNIQUE FOR OPERATING PEN-BASED INTERFACES USING TOUCH", PROCEEDINGS OF THE SIGCHI CONFERENCE ON HUMAN FACTORS IN COMPUTING SYSTEMS 2007, CHI 2007 2007 ASSOCIATION FOR COMPUTING MACHINERY US; [CONFERENCE ON HUMAN FACTORS IN COMPUTING SYSTEMS], NEW YORK, NY : ACM, 28 April 2007 (2007-04-28), pages 657-666, XP002495578, DOI: 10.1145/1240624.1240727 ISBN: 978-1-59593-593-9

## Description

### CROSS-REFERENCE TO RELATED APPLICATION

This application claims the priority benefit of Korean Patent Application No. 10-2010-0062277, filed on June 29, 2010 in the Korean Intellectual Property Office.

### BACKGROUND OF THE INVENTION

### 1. Field of the invention

The present invention relates to a mobile terminal and a method for controlling the operation of the mobile terminal, wherein it is possible to control operations of the mobile terminal using a pointer including a click region that is at least partially transparent.

### 2. Description of the Related Art

A mobile terminal is a portable device having a function to perform voice and video communication, a function to receive and output information, a function to store data, and the like. As the functionality of the mobile terminal has been diversified, a mobile terminal having various complex functions such as a function to capture still or moving images (i.e., photographs or videos), a function to reproduce music or video files, a game function, a function to receive broadcasts, and a wireless Internet function has been implemented as an all-in-one multimedia player.

Various novel attempts have been made in terms of hardware or software to provide more complex functionality to the mobile terminal implemented as such a multimedia player.

However, since the mobile terminal should be designed taking into consideration mobility or portability, allocation of space for a user interface is restricted and the size of a screen that can be displayed on the mobile terminal is also restricted. Thus, it is difficult for the user to select a specific object displayed on a small screen through touch input using their finger. It is also difficult for the user to correctly identify which part is touched on the screen since the touched part is covered by their finger.

The mobile terminal may be implemented so as to allow the user to move a pointer displayed on a screen and to select a specific object by operating an input key having a PC mouse function. However, since it is difficult for the user to intuitively operate the input key in this implementation scheme, it not only takes a long time to master how to operate the input key but the implementation scheme is also inapplicable to a mobile terminal having no input key corresponding to a PC mouse.

Thus, to efficiently use various functions provided by a mobile terminal, there is a need to control the operation of the mobile terminal through a novel input/output scheme different from conventional input/output schemes.

WO 03/054681 A1 describes using a touch screen by a pointing means. A screen displays a cursor, for instance a virtual stylus, which comprises a handle part and a pointing part. A user may place a pointing means, e.g. a finger, onto the screen. The screen detects the touch location, and the handle part moves to the indicated point. The pointing part moves along with the handle part but is located at a different point than the handle part, such that the point indicated by the pointing part can be seen from under the finger.

WO 2009/080653 A1 describes moving a cursor and selecting objects on a touch screen using a finger pointer. The finger pointer is used for moving a cursor and selecting objects on a touch screen. The finger pointer includes a cursor indicator and a finger contact area. The user touches the touch screen within the finger contact area. The user then contacts the touch screen at a different location to move the finger pointer to the different location such that the cursor indicator is positioned on an object to be selected.

EP 1 674 976 A2 describes improving touch screen accuracy. A method for controlling an input using a cursor comprises displaying the cursor on a touch sensitive display, receiving a dragging touch input on the touch sensitive display beginning at a first location adjacent to the cursor, and, responsive to receiving the dragging touch input, moving the displayed cursor to follow and remain adjacent to the dragging touch input.

EP 2 098 947 A2 discloses a computer-implemented method using an electronic device having a touch-sensitive display, comprising displaying text on the touch-sensitive display; detecting a text selection initiation gesture comprising placement of two or more fingers on the touch-sensitive display for a predetermined amount of time, and in response to the detecting of the text selection initiation gesture, inserting a text selection area bounded by a first end point located in the text at a first location and a second end point in the text at a second location.

US 2005/088410 A1 discloses a method for displaying a dynamic cursor in a computer graphical user interface, whereby the cursor changes according to the processing state of applications over which the cursor is located, with respect to an operating system element, according to the result of a drag operation or with respect to quantitative data pertaining to objects being dragged.

US 2009/228792 A1 discloses methods and GUIs for editing on a portable multifunction device with a touch screen display. While displaying an application interface of an application, the device detects a multi-touch edit initiation gesture on the touch screen display. In response to detection of the multi-touch edit initiation gesture, the device displays a plurality of user-selectable edit option icons in an area of the touch screen display that is independent of a location of the multi-touch edit initiation gesture. The device also displays a start point object and an end point object to select content displayed by the application in the application interface.

### SUMMARY OF THE INVENION

Therefore, the present invention provide a mobile terminal and a method for controlling an operation of the mobile terminal as defined by the independent claims, which allows the user to control various operations of the mobile terminal using a pointer that can be intuitively operated by the user even when the pointer is displayed on a small screen. The dependent claims define the preferred embodiments. These and other embodiments are further detailed below. The scope of the invention is defined by the claims.

### BRIEF DESCRIPTION OF THE DRAWINGS

The above and other aspects, features, and advantages of the present invention will become more apparent upon consideration of the following description of preferred embodiments, taken in conjunction with the accompanying drawing figures.
FIG. 1 is a block diagram of a mobile terminal according to an exemplary embodiment of the present invention;
FIG. 2 is a front perspective view of the mobile terminal shown in FIG. 1;
FIG. 3 is a rear perspective view of the mobile terminal shown in FIG. 2;
FIG. 4 illustrates proximity input;
FIG. 5A is a flow chart illustrating a method for controlling the operation of a mobile terminal according to the present.invention and FIG 5B is a flow chart illustrating a method for controlling the operation of a mobile terminal according to an exemplary embodiment;
FIG. 6 illustrates a method for controlling the operation of a mobile terminal according to another exemplary embodiment;
FIGS. 7 and 8 illustrate a pointer used in a method for controlling the operation of a mobile terminal according to the present invention;
FIGS. 9 and 10 illustrate a procedure for activating pointer display; and
FIGS. 12 to 15 and 17 to 21 illustrate examples in which operations of a mobile terminal are controlled using a pointer on various operation screens according to exemplary embodiments and FIGS 11 and 16 illustrates operations of a mobile terminal which are controlled using a pointer on operation screens according to the present invention.

### DETAILED DESCRIPTION OF THE PREFERRED EMBODIMENTS

The present disclosure will hereinafter be described in detail with reference to the accompanying drawings in which exemplary embodiments of the invention are shown.

The term 'mobile terminal', as used herein, may indicate a mobile phone, a smart phone, a laptop computer, a digital broadcast receiver, a personal digital assistant (PDA), a portable multimedia player (PMP), a navigation device, a tablet computer, an electronic-book (e-book) reader, and the like. In this disclosure, the terms 'module' and 'unit' can be used interchangeably.

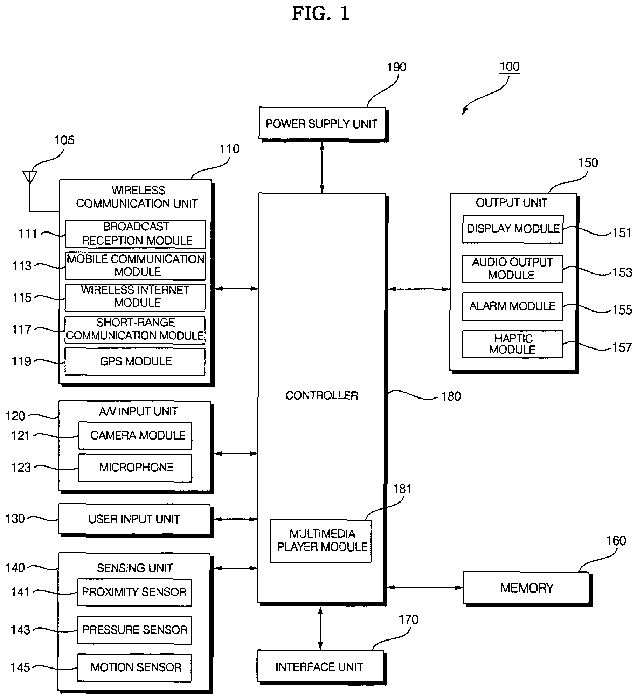

FIG. 1 illustrates a block diagram of a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, and a power supply unit 190. Here, when the above constituent elements are implemented, two or more of the constituent elements may be combined into one constituent element, or one constituent element may be divided into two or more constituent elements, if appropriate.

The wireless communication unit 110 may include a broadcast reception module 111, a mobile communication module 113, a wireless internet module 115, a short-range communication module 117, and a global positioning system (GPS) module 119.

The broadcast reception module 111 may receive broadcast signals and/or broadcast-related information from an external broadcast management server through a broadcast channel. The broadcast channel may be a satellite channel or a terrestrial channel. The broadcast management server may be a server which generates broadcast signals and/or broadcast-related information and transmits the generated broadcast signals and/or the generated broadcast-related information or may be a server which receives and then transmits previously-generated broadcast signals and/or previously-generated broadcast-related information.

The broadcast-related information may include broadcast channel information, broadcast program information and/or broadcast service provider information. The broadcast signals may include a TV broadcast signal, a radio broadcast signal, a data broadcast signal, the combination of a data broadcast signal and a TV broadcast signal or the combination of a data broadcast signal and a radio broadcast signal. The broadcast-related information may be provided to the mobile terminal 100 through a mobile communication network. In this case, the broadcast-related information may be received by the mobile communication module 113, rather than by the broadcast reception module 111. The broadcast-related information may come in various forms. For example, the broadcast-related information may come in the form of digital multimedia broadcasting (DMB) electronic program guide (EPG) or digital video broadcasting-handheld (DVB-H) electronic service guide (ESG).

The broadcast reception module 111 may receive broadcast signals using various broadcasting systems, such as DMB-terrestrial (DMB-T), DMB-satellite (DMB-S), media forward link only (MediaFLO), DVB-H, and integrated services digital broadcast-terrestrial (ISDB-T). In addition, the broadcast reception module 111 may be suitable not only for the above-mentioned digital broadcasting systems but also for nearly all types of broadcasting systems other than those set forth herein. The broadcast signal and/or the broadcast-related information received by the broadcast reception module 111 may be stored in the memory 160.

The mobile communication module 113 may transmit wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages.

The wireless internet module 115 may be a module for wirelessly accessing the internet. The wireless internet module 115 may be embedded in the mobile terminal 100 or may be installed in an external device. The wireless internet module 115 may be embedded in the mobile terminal 100 or may be installed in an external device. The wireless internet module 115 may use various wireless internet technologies such as wireless local area network (WLAN), Wireless Broadband (WiBro), World Interoperability for Microwave Access (Wimax), and High Speed Downlink Packet Access (HSDPA).

The short-range communication module 117 may be a module for short-range communication. The short-range communication module 117 may use various short-range communication techniques such as Bluetooth, radio frequency identification (RFID), infrared data association (IrDA), ultra wideband (UWB), and ZigBee.

The GPS module 119 may receive position information from a plurality of GPS satellites.

The A/V input unit 120 may be used to receive audio signals or video signals. The A/V input unit 120 may include a camera module 121 and a microphone 123. The camera module 121 may process various image frames such as still images or moving images captured by an image sensor during a video call mode or an image capturing mode. The image frames processed by the camera module 121 may be displayed by a display module 151.

The image frames processed by the camera module 121 may be stored in the memory 160 or may be transmitted to an external device through the wireless communication unit 110. The mobile terminal 100 may include two or more cameras 121.

The microphone 123 may receive external audio signals during a call mode, a recording mode, or a voice recognition mode and may convert the received sound signals into electrical audio data. During the call mode, the mobile communication module 113 may convert the electrical sound data into data that can be readily transmitted to a mobile communication base station, and may then output the data obtained by the conversion. The microphone 123 may use various noise removal algorithms to remove noise that may be generated during the reception of external sound signals.

The user input unit 130 may generate key input data based on user input for controlling the operation of the mobile terminal 100. The user input unit 130 may be implemented as a keypad, a dome switch, or a static pressure or capacitive touch pad which is capable of receiving a command or information by being pushed or touched by a user. Alternatively, the user input unit 130 may be implemented as a wheel, a jog dial or wheel, or a joystick capable of receiving a command or information by being rotated. Still alternatively, the user input unit 130 may be implemented as a finger mouse. In particular, if the user input unit 130 is implemented as a touch pad and forms a mutual layer structure with the display module 151, the user input unit 130 and the display module 151 may be collectively referred to as a touch screen.

The sensing unit 140 may determine a current state of the mobile terminal 100 such as whether the mobile terminal 100 is opened or closed, the position of the mobile terminal 100 and whether the mobile terminal 100 is placed in contact with the user, and may generate a sensing signal for controlling the operation of the mobile terminal 100. For example, when the mobile terminal 100 is a slider-type mobile phone, the sensing unit 140 may determine whether the mobile terminal 100 is opened or closed. In addition, the sensing unit 140 may determine whether the mobile terminal 100 is powered by the power supply unit 190 and whether the interface unit 170 is connected to an external device.

The sensing unit 140 may include a detection sensor 141, a pressure sensor 143 and a motion sensor 145. The detection sensor 141 may detect an approaching object or whether there is an object nearby the mobile terminal 100 without mechanical contact. More specifically, the detection sensor 141 may detect an approaching object based on a change in an alternating current (AC) magnetic field or a static magnetic field, or the rate of change of capacitance. The sensing unit 140 may include two or more detection sensors 141.

The pressure sensor 143 may determine whether pressure is being applied to the mobile terminal 100 or may measure the magnitude of pressure, if any, applied to the mobile terminal 100. The pressure sensor 143 may be installed in a certain part of the mobile terminal 100 where the detection of pressure is necessary. For example, the pressure sensor 143 may be installed in the display module 151. In this case, it is possible to differentiate a typical touch input from a pressure touch input, which is generated by applying greater pressure than that used to generate a typical touch input, based on a signal output by the pressure sensor 143. In addition, it is possible to determine the magnitude of pressure applied to the display module 151 upon receiving a pressure touch input based on the signal output by the pressure sensor 143.

The motion sensor 145 may determine the location and motion of the mobile terminal 100 using an acceleration sensor or a gyro sensor.

Generally, acceleration sensors are a type of device for converting a vibration in acceleration into an electric signal. With recent developments in micro-electromechanical system (MEMS) technology, acceleration sensors have been widely used in various products for various purposes ranging from detecting large motions such as car collisions as performed in airbag systems for automobiles to detecting minute motions such as the motion of the hand as performed in gaming input devices. In general, two or more acceleration sensors representing different axial directions are incorporated into a single package. There are some cases when the detection of only one axial direction, for example, a Z-axis direction, is necessary. Thus, when an X- or Y-axis acceleration sensor, instead of a Z-axis acceleration sensor, is required, the X- or Y-axis acceleration sensor may be mounted on an additional substrate, and the additional substrate may be mounted on a main substrate.

Gyro sensors are sensors for measuring angular velocity, and may determine the relative direction of the rotation of the mobile terminal 100 to a reference direction.

The output unit 150 may output audio signals, video signals and alarm signals. The output unit 150 may include the display module 151, an audio output module 153, an alarm module 155, and a haptic module 157.

The display module 151 may display various information processed by the mobile terminal 100. For example, if the mobile terminal 100 is in a call mode, the display module 151 may display a user interface (UI) or a graphic user interface (GUI) for making or receiving a call. If the mobile terminal 100 is in a video call mode or an image capturing mode, the display module 151 may display a UI or a GUI for capturing or receiving images.

If the display module 151 and the user input unit 130 form a mutual layer structure and are thus implemented as a touch screen, the display module 151 may be used not only as an output device but also as an input device capable of receiving information by being touched by the user.

If the display module 151 is implemented as a touch screen, the display module 151 may also include a touch screen panel and a touch screen panel controller. The touch screen panel is a transparent panel attached onto the exterior of the mobile terminal 100 and may be connected to an internal bus of the mobile terminal 100. The touch screen panel keeps monitoring whether the touch screen panel is being touched by the user. Once a touch input to the touch screen panel is received, the touch screen panel transmits a number of signals corresponding to the touch input to the touch screen panel controller. The touch screen panel controller processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

The display module 151 may include electronic paper (e-paper). E-paper is a type of reflective display technology and can provide as high resolution as ordinary ink on paper, wide viewing angles, and excellent visual properties. E-paper can be implemented on various types of substrates such as a plastic, metallic or paper substrate and can display and maintain an image thereon even after power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules.

The display module 151 may include at least one of an LCD, a thin film transistor (TFT)-LCD, an organic light-emitting diode (OLED), a flexible display, and a three-dimensional (3D) display. The mobile terminal 100 may include two or more display modules 151. For example, the mobile terminal 100 may include an external display module (not shown) and an internal display module (not shown).

The audio output module 153 may output audio data received by the wireless communication unit 110 during a call reception mode, a call mode, a recording mode, a voice recognition mode, or a broadcast reception mode or may output audio data present in the memory 160. In addition, the audio output module 153 may output various sound signals associated with the functions of the mobile terminal 100 such as receiving a call or a message. The audio output module 153 may include a speaker and a buzzer.

The alarm module 155 may output an alarm signal indicating the occurrence of an event in the mobile terminal 100. Examples of the event include receiving a call signal, receiving a message, and receiving a key signal. Examples of the alarm signal output by the alarm module 155 include an audio signal, a video signal and a vibration signal. More specifically, the alarm module 155 may output an alarm signal upon receiving an incoming call or message. In addition, the alarm module 155 may receive a key signal and may output an alarm signal as feedback to the key signal. Therefore, the user may be able to easily recognize the occurrence of an event based on an alarm signal output by the alarm module 155. An alarm signal for notifying the user of the occurrence of an event may be output not only by the alarm module 155 but also by the display module 151 or the audio output module 153.

The haptic module 157 may provide various haptic effects (such as vibration) that can be perceived by the user. If the haptic module 157 generates vibration as a haptic effect, the intensity and the pattern of vibration generated by the haptic module 157 may be altered in various manners. The haptic module 157 may synthesize different vibration effects and may output the result of the synthesization. Alternatively, the haptic module 157 may sequentially output different vibration effects.

The haptic module 157 may provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 may be configured to enable the user to recognize a haptic effect using the kinesthetic sense of the fingers or the arms. The mobile terminal 100 may include two or more haptic modules 157.

The memory 160 may store various programs necessary for the operation of the controller 180. In addition, the memory 160 may temporarily store various data such as a list of contacts, messages, still images, or moving images.

The memory 160 may include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). The mobile terminal 100 may operate a web storage, which performs the functions of the memory 160 on the internet.

The interface unit 170 may interface with an external device that can be connected to the mobile terminal 100. The interface unit 170 may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone. The interface unit 170 may receive data from an external device or may be powered by an external device. The interface unit 170 may transmit data provided by an external device to other components in the mobile terminal 100 or may transmit data provided by other components in the mobile terminal 100 to an external device.

When the mobile terminal 100 is connected to an external cradle, the interface unit 170 may provide a path for supplying power from the external cradle to the mobile terminal 100 or for transmitting various signals from the external cradle to the mobile terminal 100.

The controller 180 may control the general operation of the mobile terminal 100. For example, the controller 180 may perform various control operations regarding making/receiving a voice call, transmitting/receiving data, or making/receiving a video call. The controller 180 may include a multimedia player module 181, which plays multimedia data. The multimedia player module 181 may be implemented as a hardware device and may be installed in the controller 180. Alternatively, the multimedia player module 181 may be implemented as a software program.

The power supply unit 190 may be supplied with power by an external power source or an internal power source and may supply power to the other components in the mobile terminal 100.

The mobile terminal 100 may include a wired/wireless communication system or a satellite communication system and may thus be able to operate in a communication system capable of transmitting data in units of frames or packets.

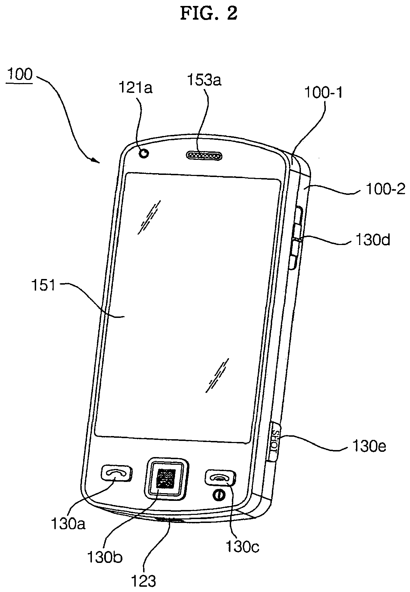

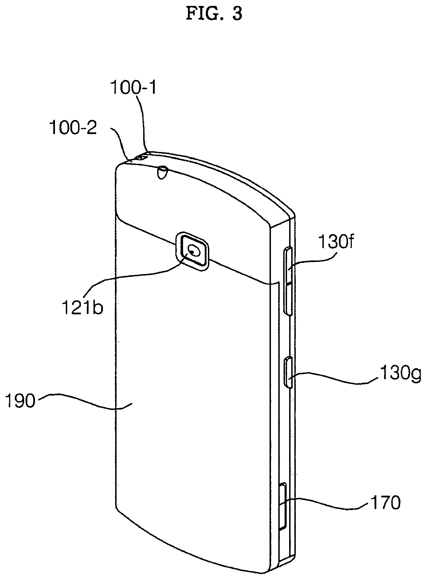

The exterior of the mobile terminal 100 will hereinafter be described in detail with reference to FIGS. 2 and 3. Various embodiments presented herein can be implemented using nearly any type of mobile terminal, such as a folder-type, a bar-type, a swing-type and a slider-type mobile terminal. However, for convenience, it is assumed that the mobile terminal 100 is a bar-type mobile terminal equipped with a touch screen.

FIG. 2 illustrates a front perspective view of the mobile terminal 100. Referring to FIG. 2, the exterior of the mobile terminal 100 may be formed by a front case 100-1 and a rear case 100-2. Various electronic devices may be installed in the space formed by the front case 100-1 and the rear case 100-2. The front case 100-1 and the rear case 100-2 may be formed of a synthetic resin through injection molding. Alternatively, the front case 100-1 and the rear case 100-2 may be formed of a metal such as stainless steel (STS) or titanium (Ti).

The display module 151, a first audio output module 153a, a first camera 121a, and first through third user input modules 130a through 130c may be disposed in the main body of the mobile terminal 100, and particularly, in the front case 100-1. Fourth and fifth user input modules 130d and 130e and the microphone 123 may be disposed on one side of the rear case 100-2.

If a touch pad is configured to overlap the display module 151 and thus to form a mutual layer structure, the display module 151 may serve as a touch screen. Thus, the user can enter various information simply by touching the display module 151.

The first audio output module 153a may be implemented as a receiver or a speaker. The first camera 121a may be configured to be suitable for capturing a still or moving image of the user. The microphone 123 may be configured to properly receive the user's voice or other sounds.

The first through fifth user input modules 130a through 130e and sixth and seventh user input modules 130f and 130g may be collectively referred to as the user input unit 130. The user input unit 130 may adopt various tactile manners as long as it can offer tactile feedback to the user.

For example, the user input unit 130 may be implemented as a dome switch or touch pad capable of receiving a command or information by being pushed or touched by the user; or a wheel, a jog dial or wheel, or a joystick capable of receiving a command or information by being rotated. More specifically, the first through third user input modules 130a through 130c may be used to make or receive a call, move a mouse pointer, scroll a display screen, and enter various commands such as 'start', 'end', and 'scroll' to the mobile terminal 100, the fourth user input module 130d may be used to select an operating mode for the mobile terminal 100, and the fifth user input module 130e may serve as a hot key for activating certain functions of the mobile terminal 100.

The first user input module 130a may allow the user to, the second user input module 130b may be used to enter various numerals, characters or symbols, and the third and fourth user input modules 130c and 130d may be used as hot keys for activating certain functions of the mobile terminal 100.

FIG. 3 illustrates a rear perspective view of the mobile terminal 100. Referring to FIG. 3, a second camera 121b may be disposed at the rear of the rear case 100-2. The sixth and seventh user input modules 130f and 130e and the interface unit 170 may be disposed on one side of the second body 100B.

The second camera 121b may have a different photographing direction from the first camera 121a shown in FIG. 2. In addition, the first and second cameras 121a and 121b may have different resolutions.

A camera flash and a mirror may be disposed near the second camera 121b. The camera flash may be used to illuminate a subject when the user attempts to capture an image of the subject with the second camera 121b. The mirror may be used for the user to prepare himself or herself for taking a self shot.

A second audio output module (not shown) may be additionally provided in the rear case 100-2. The second audio output module may realize a stereo function along with the first audio output module 153a. The second audio output module may also be used in a speaker-phone mode.

The interface unit 170 may serve as a pathway for allowing the mobile terminal 100 to exchange data with an external device.

Not only an antenna (not shown) for making or receiving a call but also an antenna (not shown) for receiving a broadcast signal may be disposed on one side of the rear case 100-2. The antennas may be installed so as to be able to be retracted from the rear case 100-2.

The power supply unit 190, which supplies power to the mobile terminal 100, may be disposed in the rear case 100-2. The power supply unit may be a rechargeable battery and may be coupled to the rear case 100-2 so as to be attachable to or detachable from the rear case 100-2.

The second camera 121b and the other elements that have been described as being provided in the rear case 100-2 may be provided in the front case 100-1. In addition, the first camera 121a may be configured to be rotatable and thus to cover the photographing direction of the second camera 121b. In this case, the second camera 121b may be optional.

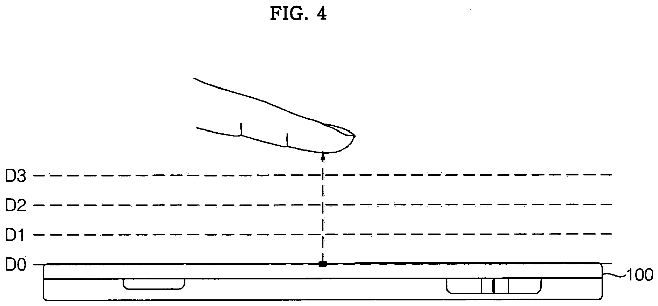

FIG. 4 illustrates proximity input. As shown in FIG. 4, when a proximity object such as the user's finger or a pen approaches the display module 151, a proximity sensor 141 provided inside or near the display module 151 senses the approach and outputs a proximity signal.

The proximity sensor 141 may be configured so as to output different proximity signals depending on the distance between the proximity object and the display module 151 which will hereinafter be referred to as a "proximity level" or "proximity depth". When a proximity sensor is designed to output a proximity signal when a proximity object comes within a certain distance, the distance is referred to as a "detection distance". For example, a plurality of proximity sensors having different detection distances may be provided and proximity signals output from the proximity sensors may be compared to determine how close a proximity object is to the display module 151.

Although the proximity sensors are provided so as to sense 3 proximity levels in the example illustrated in FIG. 4, proximity sensors may also be provided so as to sense less than 3 proximity levels or more than 4 proximity levels. Specifically, when the proximity object has touched the display module 151 (see "D0" in FIG. 4), the touch is identified as a normal touch. When the proximity object is located above the display module 151 by a distance less than "D1", the touch is identified as a proximity touch of a first proximity level. When the proximity object is located above the display module 151 by a distance equal to or greater than "D1" and less than "D2", the touch is identified as a proximity touch of a second proximity level. When the proximity object is located above the display module 151 by a distance equal to or greater than "D2" and less than "D3", the touch is identified as a proximity touch of a third proximity level. When the proximity object is located above the display module 151 by a distance equal to or greater than "D3", the proximity touch is identified as being released.

A plurality of proximity sensors having different detection regions may also be provided and then one of the proximity sensors which outputs a proximity signal may be identified to determine a position on the display module 151 which the proximity object approaches and to determine whether or not the proximity object is moving within a set proximity of the display module 151.

The controller 180 may identify proximity touches of the proximity object at different proximity levels and at different proximity positions as different input signals and may then perform various operation controls according to such different input signals. In the present invention, such a proximity touch input or a normal touch input may be used to move a pointer displayed on an operation screen.

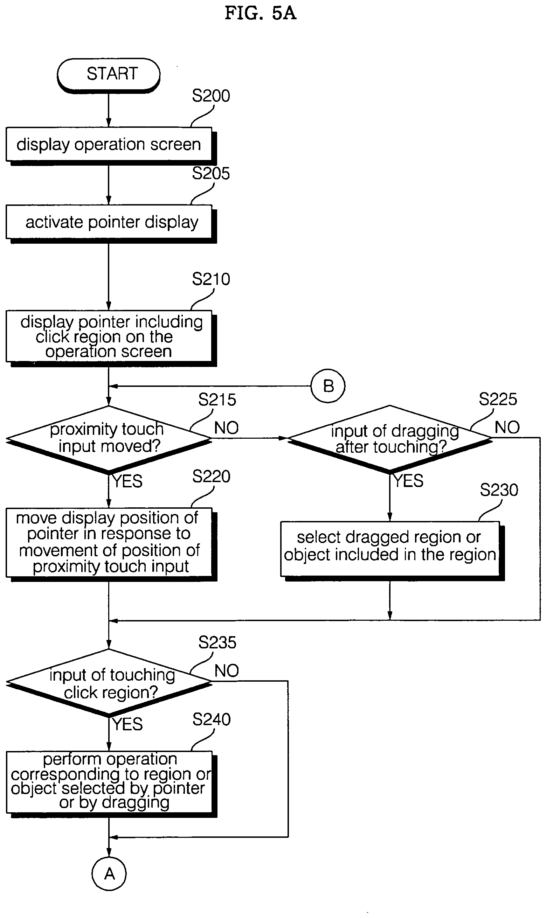

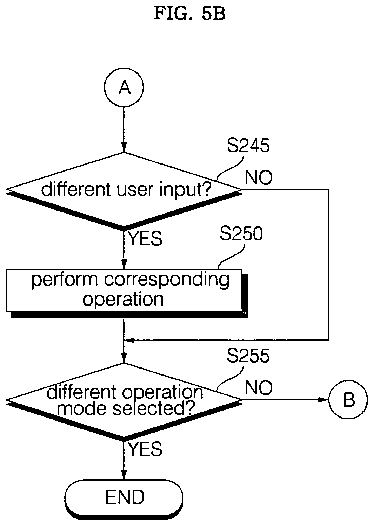

FIG. 5A is a flow chart illustrating a method for controlling the operation of a mobile terminal according to the present invention and FIG 5B is a flow chart illustrating a method for controlling the operation of a mobile terminal according to an exemplary embodiment. As shown in FIG. 5A, the controller 180 displays an operation screen corresponding to a menu item or an operation selected by a user command or the like on the display module 151 (S200). Examples of the operation screen displayed on the display module 151 include a standby screen, a message reception screen, a message transmission screen, a main menu screen, an image or moving image viewer screen, a broadcast screen, a map screen, a webpage screen, and the like.

When pointer display is activated (or selected) while the operation screen is being displayed (S205), the controller 180 displays a pointer including a click region, which is at least partially transparent, on the operation screen (S210).

The user may activate pointer display by inputting a specific key, which has been set to control activation of pointer display, or by touching a preset region, icon, or the like on the operation screen. The user may also activate pointer display by making a gesture input or the like having a preset pattern on the operation screen. The gesture input is an input of dragging a preset path from among various inputs of dragging a path after touching the display module 151.

The pointer that is displayed on the operation screen in response to pointer display activation includes a click region that is at least partially transparent. Specifically, the pointer includes an indication region for indicating a specific object and a click region for making a normal touch input or a proximity touch input of moving or clicking the pointer. This configuration allows the user to simultaneously view the click region and contents of the operation screen displayed below the click region.

The size of the indication region of the pointer may be set to a small size such that it is possible to select a small object and the size of the click region thereof may be set to a size at which the user can easily move or click the pointer by their finger. The indication region of the pointer may be displayed in the form of an arrow or a triangle and the click region may be displayed in the form of a circle or a rectangle. The display form or size of each of the indication region and the click region may be altered in size and form as desired by the user. A transparency adjustment menu, which allows the user to adjust the transparency of the click region, may be additionally provided.

The pointer may be used to select a specific object on an operation screen according to a user input that is described later or may be used to adjust a progress bar or the like or to move a setting bar. In this embodiment, the pointer includes a cursor indicating the text input pointer.

When the position of a proximity touch input is moved after the proximity touch input is made on the click region with the pointer being displayed (S215), the controller 180 moves and displays the pointer in response to the movement of the position of the proximity touch input (S220). The proximity touch input may be detected according to change in a sensed signal output from the proximity sensor 141. The pointer may also be moved through input by a finger mouse corresponding to a PC mouse.

When the user performs an input of dragging a region after touching the click region for a predetermined time or longer with no object being at a position indicated by the indication region of the pointer (S225), the controller 180 selects the dragged region or an object included in the dragged region (S230). That is, the controller 180 performs an operation corresponding to the mouse drag. The pointer may be displayed in a different form while such a drag input operation is being performed.

An object indicated or selected by the pointer may be displayed in a color or form different from those of other objects. An object indicated or selected by the pointer may be displayed on the operation screen such that the color or background color of the object is different from those of other objects.

When an input of touching the click region of the pointer is made (S235), the controller 180 performs an operation corresponding to an object or a region that is indicated by the pointer on the operation screen or is selected by a drag input (S240). Examples of the object indicated by the pointer include a hyperlink object, a soft key, and a menu icon.

Referring to FIG. 5B, when a user input different from the pointer movement command or drag command is made or an event other than pointer movement or dragging has occurred (S245), the controller 180 performs an operation corresponding to the different user input or the event such as call reception (S250). When a different operation mode has not been selected, the controller 180 repeats the procedure from step S215 (S255).

According to the method described above, it is possible to control various operations using the pointer including the at least partially transparent click region through touch input using the user's finger or the like such that the pointer does not obscure content displayed on the operation screen.

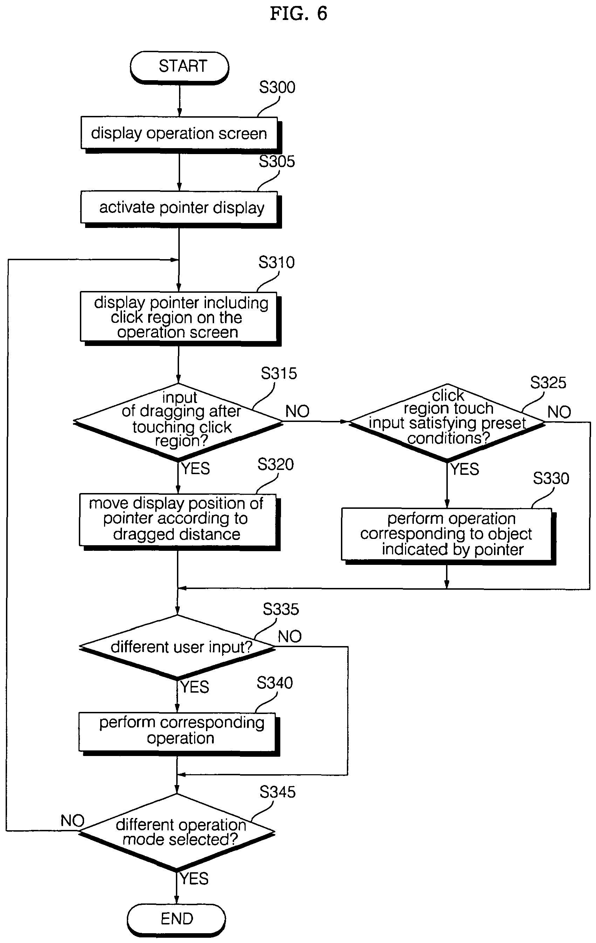

FIG. 6 illustrates a method for controlling the operation of a mobile terminal according to another exemplary embodiment.

Processes of steps S300 to S310 in which a pointer including a click region which is at least partially transparent is displayed on an operation screen and processes of steps S335 to S345 in which a procedure prior to selection of a different operation mode is repeated are similar to corresponding processes described in the above embodiment.

However, when an input of dragging a distance after touching the click region of the pointer is made (S315), the controller 180 moves and displays the pointer according to the dragged distance (S320).

When the user has made an input of touching the click region which satisfies preset conditions (S325), the controller 180 performs an operation corresponding to an object indicated by the pointer (S330). Here, the touch input satisfying the preset conditions indicates a touch input satisfying criteria preset based on touch pressure, touch time, touch area, the number of touches, and the like. For example, the controller 180 may perform a control operation to perform an operation corresponding to an object that is indicated by the pointer in response to touching of the click region for a predetermined time or longer or in response to a double touch input.

Also in this case, when the user performs an input of dragging a distance after touching the click region with no object being at a position indicated by the indication region of the pointer, the controller 180 may perform an operation corresponding to a mouse drag input for selecting a region corresponding to the dragged distance or selecting an object included in the region while moving the pointer.

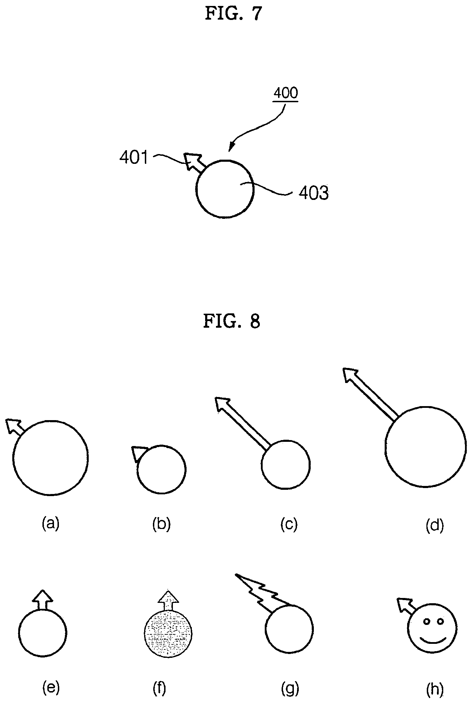

FIGS. 7 and 8 illustrate a pointer used in a method for controlling the operation of a mobile terminal according to the present invention.

As shown in FIG. 7, a pointer 400 may be divided into an indication region 401 for indicating a specific object and a click region for making a normal touch input or a proximity touch input of moving or clicking the pointer. The click region 403 is at least partially transparent and is thus superimposed on the operation screen. The indication region 401 may also be displayed transparently according to user selection.

The displayed shape, size, color, and the like of each of the indication region 401 and the click region 403 of the pointer 400 may be changed variously as shown in FIG. 8.

The click region 403 may also be used to provide a magnification function to display a magnified version of the superimposed portion of the screen in the click region 403.

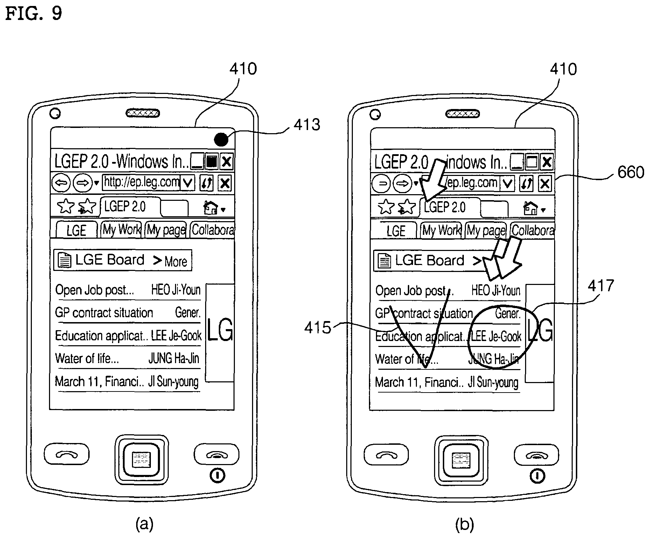

FIGS. 9 to 21 illustrate exemplary screens displayed on a display module in a method for controlling the operation of a mobile terminal according to an embodiment of the present invention.

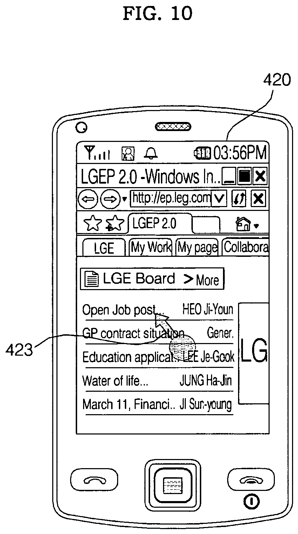

Specifically, FIGS. 9 and 10 illustrate a procedure for activating pointer display. A pointer may be displayed by touching a specific icon 413, which has been preset, on an operation screen 410 as shown in FIG. 9(a), or by making a gesture input 415 or 417 having a preset pattern as shown in FIG. 9(b).

Each of the gesture inputs 415 and 417 is an input of dragging a path having a preset pattern from among various inputs of dragging a path after touching the operation screen 410. The format of the gesture input for displaying a pointer may be preset and stored by the user or may be set by default when the mobile terminal 100 is manufactured.

The pointer may also be displayed by inputting a specific key, making an input of touching a specific region of the operation screen 410 for a predetermined time or longer, or making an input of double-touching the operation screen 410.

FIG. 10 illustrates an exemplary operation screen on which a pointer is displayed as pointer display is activated. When pointer display activation is selected, a pointer 423 is displayed on an operation screen 420. As described above, the pointer 423 includes an indication region for indicating a specific object on the operation screen 420 and a click region for making a normal touch input or a proximity touch input of moving or clicking the pointer 423.

Since the circular click region is transparently displayed in a superimposed fashion on the operation screen 420 and separates from the indication region, it is possible to clearly identify an object indicated by the pointer 423 even when the pointer 423 is moving or is being clicked.

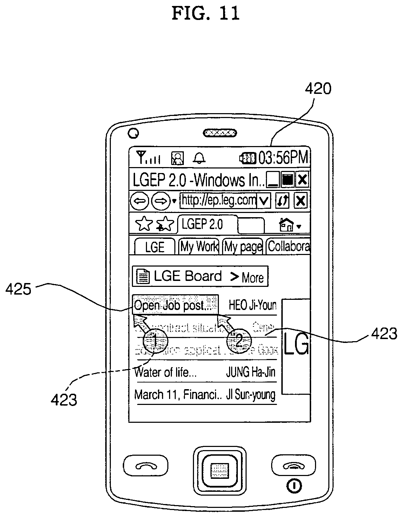

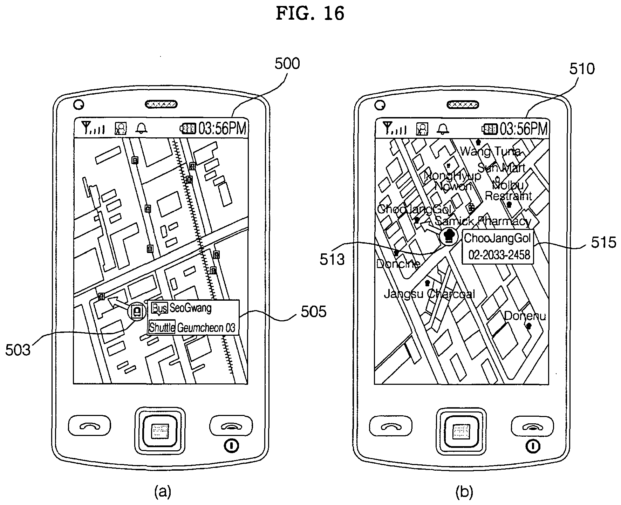

FIGS. 10 to 15 and 17 to 21 illustrate examples in which operations of a mobile terminal are controlled using a pointer on various operation screens according to exemplary embodiments and FIGS. 11 and 16 illustrate operations of a mobile terminal which are controlled using a pointer on operation screens according to the present invention.

First, FIG. 11 illustrates a drag operation being performed using a pointer on an operation screen. As shown in FIG. 11, the user drags a region 425 after touching a click region of a pointer 423 to select the region 425. In this manner, it is possible to perform an input operation corresponding to mouse drag. An operation associated with the region 425 selected by the drag input is then performed by touching the click region of the pointer 423.

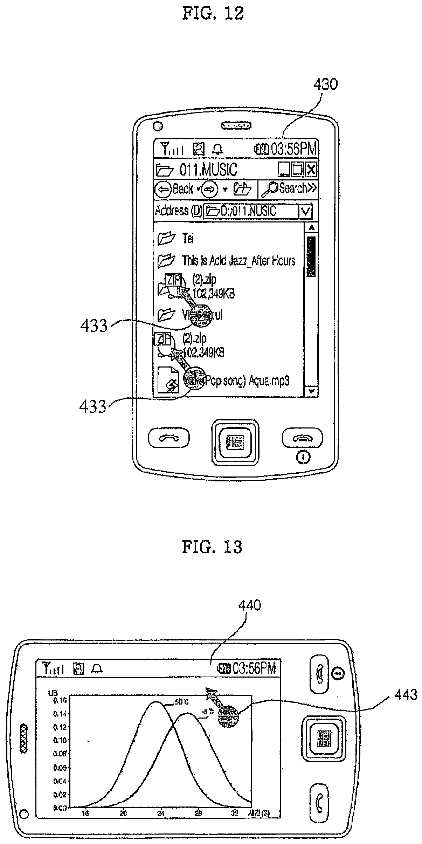

FIG. 12 illustrates an example in which a pointer is used on a screen on which file and folder names are displayed. As shown in FIG. 12, the user may select one file on a screen 430, on which file and folder names are displayed, using a pointer 433 and may then move the file in a drag and drop fashion. The user may touch the click region of the pointer 433 after the selected file reaches a desired folder to copy or move the selected file to the folder. Through these operations, it is possible to provide a drag and drop function as in standard computer environments.

FIG. 13 illustrates an example in which a pointer is used on an application screen. As shown in FIG. 13, a pointer 443 may be displayed and used to accurately edit characters or images displayed on an application screen 440 when it is difficult to accurately edit the characters or images displayed on the application screen 440 using a finger since the characters or images are small.

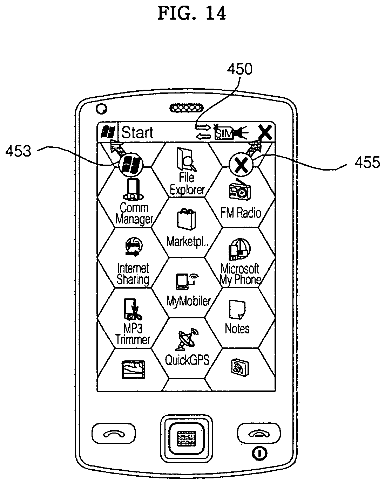

FIG. 14 illustrates an example in which a pointer is used on a Window mobile screen. When a Window mobile screen 450 is used, a touch pen rather than a finger should be used to select a menu icon since there are many small menu icons. Especially, it is difficult to click icons present at upper and lower portions of the Window mobile screen 450. In this case, pointers 453 and 455 may be displayed and used to perform desired operations. Menu icons that are currently indicated by the pointers 453 and 455 may be magnified and displayed in click regions of the pointers 453 and 455.

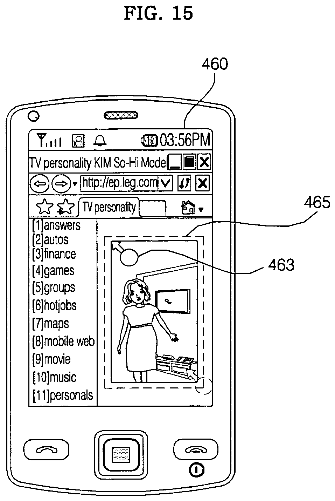

FIG. 15 illustrates an example in which a pointer is used when a screen is captured. As shown in FIG. 15, a region 465 of a webpage screen 460 may be selected by pressing a specific key and moving a pointer 463 on the webpage screen 460 and an image corresponding to the selected region 465 may then be captured and stored in a photo storage area.

Not only the webpage screen 460 but also a mode screen displayed on the display module 151 may be captured in the same manner. Using the pointer 463, the user can more precisely capture a desired portion than when using their finger.

FIG. 16 illustrates an example in which a pointer is used on a map screen. When the user moves a pointer 503 and 513 to indicate a specific structure such as a bus stop or a subway station on a map screen 500 and 510, detailed information 505 and 515 associated with the specific structure is displayed as shown in FIGS. 16(a) and 16(b). In this manner, the user can precisely select even a small object using the pointers 503 and 513 instead of using their finger.

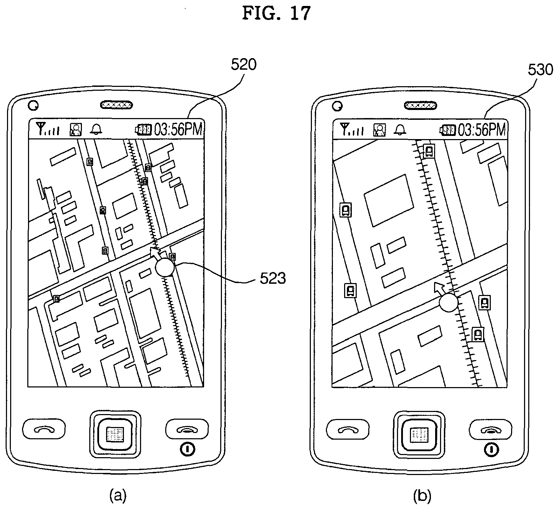

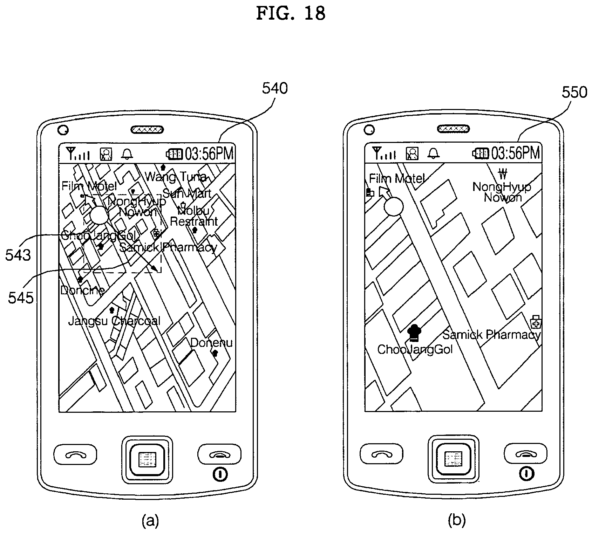

FIGS. 17 and 18 illustrate an example in which a pointer is used to zoom a map screen in or out.

When the user double-touches a click region of a pointer 523 displayed on a map screen 520 as shown in FIG. 17(a), a map screen 530 magnified with reference to a location indicated by the pointer 523 may be displayed as shown in FIG. 17(b).

When the user drags a pointer 543 on a map screen 540, a dashed guideline 545 may be displayed as shown in FIG. 18(a) and a magnified map screen 550 of a region specified by the dashed guideline 545 may then be displayed as shown in FIG. 18(b).

It is possible to zoom in or out on a desired portion using a pointer in various methods other than those described above. It is also possible to zoom in or out on a desired portion on an operation screen other than the map screen using the same methods as described above.

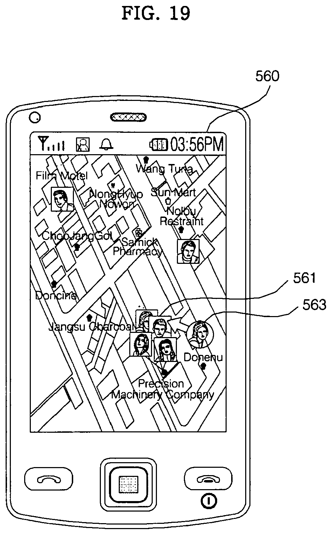

FIG. 19 illustrates an example in which a person is searched for using a pointer on a map screen. Generally, when there are a number of persons, it is difficult for the user to select a desired person using their finger since images of the persons overlap on the screen.

In this case, the user can select a desired person using a pointer 563. In addition, a face or information of a person 561 currently indicated by the pointer 563 may be displayed in a click region of the pointer 563 to allow the user to correctly select a desired person.

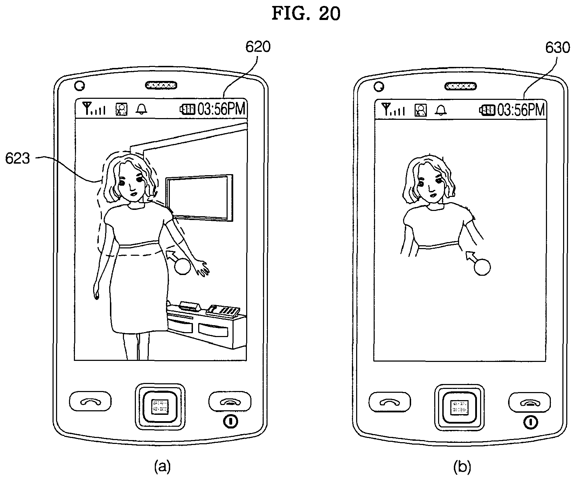

FIG. 20 illustrates an example in which a pointer is used on an image editing screen. When the user touches a click region of a pointer after selecting a region 623 using the pointer on an image editing screen 620 as shown in FIG. 20(a), a screen 630 from which a region other than the selected region 623 is removed may be displayed as shown in as shown in FIG. 20(b).

Using the pointer in this manner, the user can perform selection of a part of an image, removal of a selected part, removal of an unselected part, copying of a selected part, pasting of a copied image onto another image, drawing of a figure, and the like.

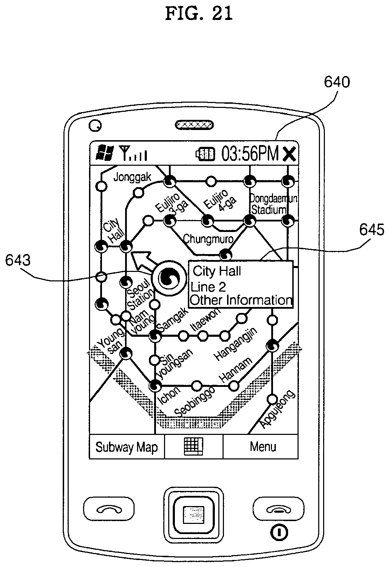

FIG. 21 illustrates an example in which a pointer is used on a subway map screen. A pointer 643 may be moved to indicate a specific station on a subway map screen 640 so as to display related information 645 as shown in FIG. 21.

Using the pointer rather than their finger, the user can correctly select a desired location such that the user's finger does not obscure the desired location. It is also possible to use a pointer including a transparent click region to perform various other control operations.

The method for controlling the operation of a mobile terminal according to the present invention can be embodied as processor readable code stored on a processor readable medium provided in the mobile terminal. The processor readable medium includes any type of storage device that stores data which can be read by a processor. Examples of the processor readable medium include Read-Only Memory (ROM), Random-Access Memory (RAM), CD-ROMs, magnetic tape, floppy disks, optical data storage devices, and so on. The processor readable medium can also be embodied in the form of carrier waves such as signals transmitted over the Internet. The processor readable medium can also be distributed over a network of coupled processor systems so that the processor readable code is stored and executed in a distributed fashion.

As is apparent from the above description, the present invention has a variety of advantages. For example, the user can allow a mobile terminal to perform a desired operation by moving a pointer including a transparent click region in a normal touch manner or in a proximity touch manner on a screen on the mobile terminal while the click region does not obscure the screen. Thus, the user can easily control a variety of operations on a mobile terminal using a pointer including a transparent click region even when the mobile terminal can display only a small screen.

Although the present invention has been illustrated and described above with reference to the specific embodiments, the present invention is not limited to the specific embodiments and it will be apparent to those skilled in the art that various modifications can be made to the embodiments without departing from the scope of the present invention as disclosed in the accompanying claims and such modifications should not be construed as departing from the scope of the present invention.

## Claims

1. A method for controlling an operation of a mobile terminal, the method comprising:
displaying (S200), on a display module (151), an operation screen corresponding to a menu item or an operation selected by a user command;
when (S205) a user input for activating pointer display which is a function of displaying a pointer (400) is received while the operation screen is being displayed, displaying (S210) the pointer (400) including a click region (403) and an indication region (401) on the operation screen;
when (S215) a position of a proximity touch input is moved after the proximity touch input is made by the user on the click region (403) with the pointer (400) being displayed, moving (S220) the pointer (400) in response to movement of a position of a proximity touch input on the click region (403);
**characterized in that**
when the pointer (400) indicates a specific object after moving the pointer (400), displaying a magnified image of the specific object in the click region (403) and detailed information (505, 515) associated with the specific object in an area adjacent to the click region (403);
when the user performs (S225) a drag input of dragging a region (425) after touching the click region (403) for a predetermined time or longer with no object being at a position indicated by the indication region (401) of the pointer (400), selecting (S230) the dragged region corresponding to the drag input; and
when (S235) an input of touching the click region (403) is made by the user, performing (S240) an operation corresponding to the specific object indicated by the pointer (400) or the dragged region selected by the drag input.

2. The method according to claim 1, wherein the click region (403) is at least partially transparent.

3. The method according to claim 1, wherein performing (S240) the operation comprises magnifying a portion of the operation screen that is within the dragged region corresponding to the drag input performed after the touch input on the click region (403).

4. The method according to claim 1, wherein performing (S240) the operation comprises moving the specific object indicated by the pointer (400) when the user performs a drag and drop operation after the input of touching the click region (403) is made.

5. A mobile terminal (100) comprising:
a user input unit (130) configured to receive at least one of a touch input, a drag input, or a key input by a user;
a sensing unit (140) configured to sense a proximity touch input made by the user;
a display module (151) configured to display an operation screen; and
a controller (180) configured to:
display (S200), on the display module (151), the operation screen corresponding to a menu item or an operation selected by a user command,
when (S205) a user input, received through the user input unit (130), for activating pointer display which is a function of displaying a pointer (400) is received while the operation screen is being displayed, display (S210), through the display module (151), the pointer (400) including a click region (403) and an indication region (401) on the operation screen,
when (S215) a position of a proximity touch input is moved after the proximity touch input is sensed on the click region (403) with the pointer (400) being displayed, move (S220) the pointer (400) in response to movement of a position of a proximity touch input on the click region (403),
**characterized in that**
when the pointer (400) indicates a specific object after moving the pointer (400), display, through the display module (151), a magnified image of the specific object in the click region (403) and detailed information (505, 515) associated with the specific object in an area adjacent to the click region (403),
when the user performs (S225) a drag input of dragging a region (425)) after touching the click region (403) for a predetermined time or longer with no object being at a position indicated by the indication region (401) of the pointer (400), select (S230) the dragged region corresponding to the drag input, and
when (S235) an input of touching the click region (403) is made, perform (S240) an operation corresponding to the specific object indicated by the pointer (400) or the dragged region selected by the drag input.

## Patentansprüche

1. Verfahren zum Steuern eines Betriebs eines mobilen Endgeräts, wobei das Verfahren Folgendes umfasst:
Anzeigen (S200) eines Bedienungsbildschirms, der einem Menüelement oder einem Vorgang, das bzw. der durch einen Anwenderbefehl ausgewählt wird, entspricht, auf einem Anzeigemodul (151);
dann, wenn (S205) eine Anwendereingabe zum Aktivieren einer Zeigeranzeige, die eine Funktion des Anzeigens eines Zeigers (400) ist, empfangen wird, während der Bedienungsbildschirm angezeigt wird, Anzeigen (S210) des Zeigers (400), der einen Klick-Bereich (403) und einen Angabebereich (401) enthält, auf dem Bedienungsbildschirm;
dann, wenn (S215) eine Position einer Berührungseingabe in räumlicher Nähe bewegt wird, nachdem die Berührungseingabe in räumlicher Nähe durch den Anwender auf dem Klick-Bereich (403) vorgenommen worden ist, wobei der Zeiger (400) angezeigt wird, Bewegen (S220) des Zeigers (400) als Antwort auf die Bewegung einer Position einer Berührungseingabe in räumlicher Nähe auf dem Klick-Bereich (403);
**dadurch gekennzeichnet, dass**
dann, wenn der Zeiger (400) nach dem Bewegen des Zeigers (400) ein bestimmtes Objekt angibt, ein vergrößertes Bildes des bestimmten Objekts im Klick-Bereich (403) und genaue Informationen (505, 515), die dem bestimmten Objekt zugeordnet sind, in einer zum Klick-Bereich (403) benachbarten Fläche angezeigt werden;
dann, wenn der Anwender nach dem Berühren des Klick-Bereichs (403) für eine vorgegebene Zeit oder länger eine ziehende Eingabe des Ziehens eines Bereichs (425) durchführt (S225), wobei an einer Position, die durch den Angabebereich (401) des Zeigers (400) angegeben wird, kein Objekt vorhanden ist, der gezogene Bereich, der der ziehenden Eingabe entspricht, ausgewählt wird (S230); und
dann, wenn (S235) eine Eingabe des Berührens des Klick-Bereichs (403) durch den Anwender vorgenommen wird, ein Vorgang durchgeführt wird (S240), der dem bestimmten Objekt, das durch den Zeiger (400) angegeben wird, oder dem gezogenen Bereich, der durch die ziehende Eingabe ausgewählt worden ist, entspricht.

2. Verfahren nach Anspruch 1, wobei der Klick-Bereich (403) zumindest teilweise durchsichtig ist.

3. Verfahren nach Anspruch 1, wobei das Durchführen (S240) des Vorgangs das Vergrößern eines Abschnitts des Bedienungsbildschirms, der innerhalb des gezogenen Bereichs liegt, der der ziehenden Eingabe entspricht, die nach der Berührungseingabe auf dem Klick-Bereich (403) durchgeführt worden ist, umfasst.

4. Verfahren nach Anspruch 1, wobei das Durchführen (S240) des Vorgangs das Bewegen des bestimmten Objekts, das durch den Zeiger (400) angegeben wird, wenn der Anwender einen Vorgang des Ziehens und Ablegens durchführt, nachdem die Eingabe des Berührens des Klick-Bereichs (403) vorgenommen worden ist, umfasst.

5. Mobiles Endgerät (100), das Folgendes umfasst:
eine Anwendereingabeeinheit (130), die konfiguriert ist, eine Berührungseingabe und/oder eine ziehende Eingabe und/oder eine Tasteneingabe durch einen Anwender zu empfangen;
eine Erfassungseinheit (140), die konfiguriert ist, eine Berührungseingabe in räumlicher Nähe, die durch den Anwender vorgenommen wird, zu erfassen;
ein Anzeigemodul (151), das konfiguriert ist, einen Bedienungsbildschirm anzuzeigen; und
eine Steuereinrichtung (180), die konfiguriert ist, um:
auf dem Anzeigemodul (151) den Bedienungsbildschirm anzuzeigen (S200), der einem Menüelement oder einem Vorgang, das bzw. der durch einen Anwenderbefehl ausgewählt wird, entspricht,
dann, wenn (S205) eine Anwendereingabe, die durch die Anwendereingabeeinheit (130) empfangen wird, zum Aktivieren einer Zeigeranzeige, die eine Funktion des Anzeigens eines Zeigers (400) ist, empfangen wird, während der Bedienungsbildschirm angezeigt wird, den Zeiger (400), der einen Klick-Bereich (403) und einen Angabebereich (401) enthält, durch das Anzeigemodul (151) auf dem Bedienungsbildschirm anzuzeigen (S210),
dann, wenn (S215) eine Position einer Berührungseingabe in räumlicher Nähe bewegt wird, nachdem die Berührungseingabe in räumlicher Nähe auf dem Klick-Bereich (403) erfasst worden ist, wobei der Zeiger (400) angezeigt wird, den Zeiger (400) als Antwort auf die Bewegung einer Position einer Berührungseingabe in räumlicher Nähe auf dem Klick-Bereich (403) zu bewegen (S220),
**dadurch gekennzeichnet, dass**
dann, wenn der Zeiger (400) nach dem Bewegen des Zeigers (400) ein bestimmtes Objekt angibt, ein vergrößertes Bild des bestimmten Objekts im Klick-Bereich (403) und genaue Informationen (505, 515), die dem bestimmten Objekt zugeordnet sind, in einer zum Klick-Bereich (403) benachbarten Fläche durch das Anzeigemodul (151) angezeigt werden;
dann, wenn der Anwender nach dem Berühren des Klick-Bereichs (403) für eine vorgegebene Zeit oder länger eine ziehende Eingabe des Ziehens eines Bereichs (425) durchführt (S225), wobei an einer Position, die durch den Angabebereich (401) des Zeigers (400) angegeben wird, kein Objekt vorhanden ist, der gezogene Bereich, der der ziehenden Eingabe entspricht, ausgewählt wird (S230), und
dann, wenn (S235) eine Eingabe des Berührens des Klick-Bereichs (403) vorgenommen wird, ein Vorgang durchgeführt wird (S240), der dem bestimmten Objekt, das durch den Zeiger (400) angegeben wird, oder dem gezogenen Bereich, der durch die ziehende Eingabe ausgewählt worden ist, entspricht.

## Revendications

1. Procédé pour commander une opération d'un terminal mobile, le procédé comportant les étapes consistant à :
afficher (S200), sur un module d'affichage (151), un écran d'opération correspondant à un élément de menu ou à une opération sélectionnée par une commande d'utilisateur ;
lorsqu'une entrée d'utilisateur destinée à activer (S205) un affichage de pointeur qui est une fonction d'affichage d'un pointeur (400) est reçue lorsque l'écran d'opération est affiché, afficher (S210) le pointeur (400) incluant une zone de clic (403) et une zone d'indication (401) sur l'écran d'opération ;
lorsqu'une position d'une entrée tactile de proximité est changée (S215) après que l'entrée tactile de proximité est effectuée par l'utilisateur sur la zone de clic (403) avec le pointeur (400) affiché, déplacer (S220) le pointeur (400) en réponse à un changement d'une position d'une entrée tactile de proximité sur la zone de clic (403) ;
**caractérisé en ce que**
lorsque le pointeur (400) indique un objet spécifique après le déplacement du pointeur (400), afficher une image agrandie de l'objet spécifique dans la zone de clic (403) et des informations détaillées (505, 515) associées à l'objet spécifique dans une zone adjacente à la zone de clic (403) ;
lorsque l'utilisateur effectue (S225) une entrée de glissement consistant à faire glisser une zone (425) après avoir touché la zone de clic (403) pendant une durée prédéterminée ou une durée plus longue sans qu'aucun objet ne soit à une position indiquée par la zone d'indication (401) du pointeur (400), sélectionner (S230) la zone glissée correspondant à l'entrée de glissement ; et
lorsqu'une entrée consistant à toucher la zone de clic (403) est effectuée (S235) par l'utilisateur, exécuter (S240) une opération correspondant à l'objet spécifique indiqué par le pointeur (400) ou à la zone glissée sélectionnée par l'entrée de glissement.

2. Procédé selon la revendication 1, dans lequel la zone de clic (403) est au moins partiellement transparente.

3. Procédé selon la revendication 1, dans lequel l'exécution (S240) de l'opération comporte l'agrandissement d'une partie de l'écran d'opération qui est dans les limites de la zone glissée correspondant à l'entrée de glissement effectuée après l'entrée tactile sur la zone de clic (403).

4. Procédé selon la revendication 1, dans lequel l'exécution (S240) de l'opération comporte le déplacement de l'objet spécifique indiqué par le pointeur (400) lorsque l'utilisateur exécute une opération de glissement et de relâchement après que l'entrée tactile de la zone de clic (403) est effectuée.

5. Terminal mobile (100) comportant :
une unité d'entrée d'utilisateur (130) configurée pour recevoir au moins une entrée parmi une entrée tactile, une entrée de glissement ou une entrée de clé par un utilisateur ;
une unité de détection (140) configurée pour détecter une entrée tactile de proximité effectuée par l'utilisateur ;
un module d'affichage (151) configuré pour afficher un écran d'opération ; et
une commande (180) configurée pour :
afficher (S200), sur le module d'affichage (151), l'écran d'opération correspondant à un élément de menu ou à une opération sélectionnée par une commande d'utilisateur ;
lorsqu'une entrée d'utilisateur, reçue via l'unité d'entrée d'utilisateur (130), destinée à activer (S205) un affichage de pointeur qui est une fonction d'affichage d'un pointeur (400) est reçue lorsque l'écran d'opération est affiché, afficher (S210), via le module d'affichage (151), le pointeur (400) incluant une zone de clic (403) et une zone d'indication (401) sur l'écran d'opération ;
lorsqu'une position d'une entrée tactile de proximité est changée (S215) après que l'entrée tactile de proximité est détectée sur la zone de clic (403) avec le pointeur (400) affiché, déplacer (S220) le pointeur (400) en réponse à un changement d'une position d'une entrée tactile de proximité sur la zone de clic (403),
**caractérisé en ce que**
lorsque le pointeur (400) indique un objet spécifique après un déplacement du pointeur (400), afficher, via le module d'affichage (151), une image grossie de l'objet spécifique dans la zone de clic (403) et des informations détaillées (505, 515) associées à l'objet spécifique dans une zone adjacente à la zone de clic (403),
lorsque l'utilisateur effectue (S225) une entrée de glissement consistant à faire glisser une zone (425) après avoir touché la zone de clic (403) pendant une durée prédéterminée ou une durée plus longue sans qu'aucun objet ne soit à une position indiquée par la zone d'indication (401) du pointeur (400), sélectionner (S230) la zone glissée correspondant à l'entrée de glissement, et
lorsqu'une entrée tactile de la zone de clic (403) est effectuée (S235), exécuter (S240) une opération correspondant à l'objet spécifique indiqué par le pointeur (400) ou à la zone glissée sélectionnée par l'entrée de glissement.
